Europäisches Patentamt

European Patent Office

Office européen des brevets

(11) Publication number: **0 200 461**
**A1**

# EUROPEAN PATENT APPLICATION

(21) Application number: 86303023.5

(22) Date of filing: 22.04.86

(51) Int. Cl.⁴: **F 16 D 25/12**
**F 15 B 7/08**

(30) Priority: 27.04.85 GB 8510778

(43) Date of publication of application:
05.11.86 Bulletin 86/45

(84) Designated Contracting States:
DE FR GB IT

(71) Applicant: LUCAS INDUSTRIES public limited company
Great King Street
Birmingham, B19 2XF West Midlands(GB)

(72) Inventor: Harrison, Anthony William
63 Middle Park Road
Selly Oak Birmingham 29(GB)

(74) Representative: Spall, Christopher John et al,
BARKER, BRETTELL & DUNCAN 138 Hagley Road
Edgbaston Birmingham B16 9PW(GB)

(54) Improvements in clutch actuating systems.

(57) A vehicle clutch actuating system includes an hydraulic system having a master cylinder 1, such that an input force from a pedal-operated member is applied to the master cylinder 1 to provide an output force to actuate the clutch. The hydraulic system also has a sealed fluid reservoir 16 for the master cylinder 1, and the hydraulic system is pressurised to a low level to maintain a load on a clutch release bearing 5. The reservoir 16 is sealed by a flexible membrane 20, on which pressurised gas acts to pressurise the system. The master cylinder 1 may be combined with a vacuum-operated clutch servo 2 which is actuated by a cable 3.

EP 0 200 461 A1

Croydon Printing Company Ltd.

./...

## IMPROVEMENTS IN CLUTCH ACTUATING SYSTEMS

This invention relates to vehicle clutch actuating systems of the kind including an hydraulic system having a master cylinder, which provides an output force to actuate the clutch in repsonse to an input force applied from a pedal-operated input member.

Where the system includes a clutch release bearing of the rolling type it is advantageous to load the bearing in the direction of actuation at all times as this prolongs its life. Normally, the bearing is loaded by a spring. Further, it is also desirable for systems of the kind set forth to include adjustment means to compensate for wear of the clutch linings. Preferably, the adjustment means is arranged to operate automatically.

According to our invention, in a vehicle clutch actuating system of the kind set forth the hydraulic system includes a reservoir of hydraulic fluid for the master cylinder, the reservoir being sealed and the hydraulic system pressurised to a low level.

This results in pressurisation of the hydraulic system at all times, thus maintaining the clutch release bearing in a loaded state. Further, as the clutch linings wear hydraulic fluid from the hydraulic system will enter the reservoir, so that the reservoir also acts as an automatic adjustment means. Adjustment will not have an adverse affect on the loading of the bearing, as the pressure will increase rather than decrease as the linings wear. The invention therefore provides a simple and effective way both of loading the bearing and providing automatic adjustment in the clutch actuating system.

Conveniently, the hydraulic system is pressurised by pressurising the reservoir. Preferably, the reservoir is sealed at least partly by a flexible membrane. It is then pressurised by means of pressurised gas acting on the flexible membrane.

The reservoir may be located in a housing for the master cylinder. The pressurised gas may also be located in a reservoir in the housing, with the gas and hydraulic fluid reservoirs separated and sealed by a flexible membrane. This has the advantage of providing a sealed-for-life unit, but other methods of sealing and pressurising the hydraulic fluid reservoir may also be used.

The actuating system may also incorporate a clutch servo, by means of which the input force is applied to the master cylinder, and the two items may then be combined in a single housing for convenience. The output from the master cylinder operates a slave cylinder, which is normally mounted on the gear box, and which actuates the clutch. The master cylinder and servo may be remote from the slave cylinder. Alternatively, the slave cylinder may also be formed with the master cylinder and servo, with the whole unit located in the transmission bell-housing. This provides a particularly convenient arrangement.

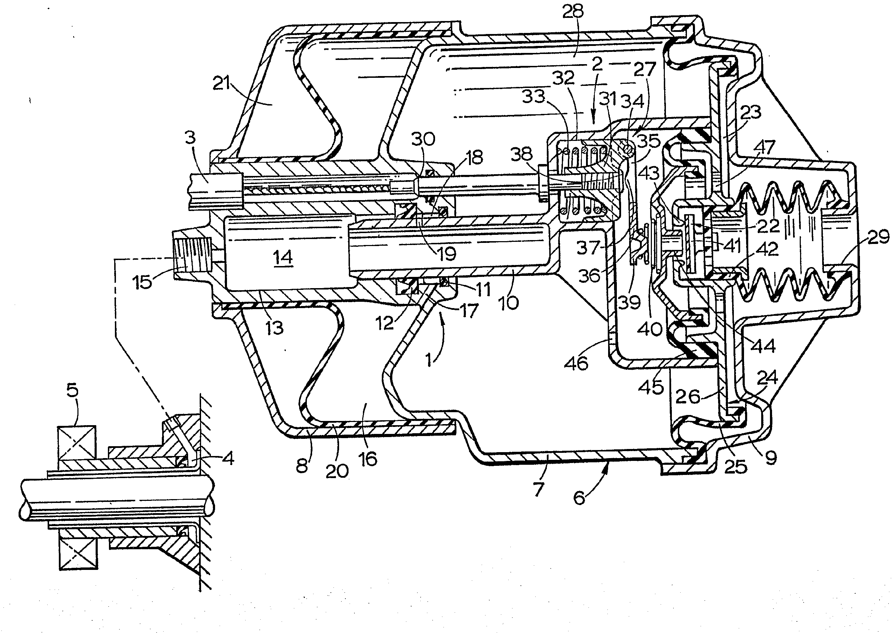

An embodiment of our invention is illustrated, by way of example only, in the accompanying drawings of which the single Figure shows, schematically, part of a clutch actuating system, including a longitudinal section through a clutch master cylinder combined with a clutch servo.

The Figure shows an hydraulic master cylinder 1 and servo 2 for a vehicle clutch actuating system, in which an input force from a pedal-operated input member (not shown) is applied, via a cable 3 and the servo 2, to the master cylinder 1, which provides an output force which acts, through a slave cylinder 4 and a clutch release bearing 5 to actuate the clutch (not shown).

The master cylinder 1 and servo 2 are combined in a single three-part housing 6. The central part 7 of the housing 6 contains the master cylinder 1 and servo 2, the housing being completed by end covers 8, 9. The master cylinder 1 is of a conventional type, and comprises a hollow piston 10 working through spaced seals 11, 12 in a bore 13 in the housing part 7. The piston 10 is operative to pressurise a pressure space 14 defined in the bore 13, and pressure from the pressure space is applied to the slave cylinder 4 through an output port 15 in the end of the bore 13. A fluid reservoir 16 for the master cylinder 1 is also located in the housing 6. The reservoir 16 is connected to the master cylinder pressure space 14 through a passage 17 in the housing part 7, a slot 18 between the seals 11, 12 and a recuperation port 19 in the piston wall. The connection is controlled by movement of the recuperation port 19 past the seal 12, which is the recuperation seal. It will be noted therefore that the master cylinder 1 is of the compressed barrel type.

The reservoir 16 is defined in the housing 6 between the central part 7 and a flexible elastomeric membrane 20 which is trapped between the part 7 and the end cover 8 to seal the reservoir 16 completely. The space 21 defined between the membrane 20 and the end cover 8 contains air which is pressurised in order to

4

pressurise the fluid in the reservoir 16 to a predetermined, and relatively low level. This results in the hydraulic system, which consists of the reservoir, master cylinder and slave cylinder, being pressurised at all times, so that the clutch release bearing 5 is loaded at all times in the direction of actuation. This prolongs the life of the bearing 5. The reservoir 16 also acts as automatic adjustment means to compensate for wear of the clutch linings, since as these wear fluid from the hydraulic system will enter the reservoir 16. However, the functioning of the reservoir 16 as automatic adjustment means does not have an adverse effect on the functioning of the hydraulic system to load the bearing 5, as the pressure in the system will tend to increase, rather then decrease as the linings wear.

The force to operate the master cylinder 1 is of course applied from the servo 2. An input force applied by the cable 3 actuates a valve means 22 to control pressurisation of a boost chamber 23 to operate a movable wall 24 which applies an augmented force to the master cylinder piston 10. The movable wall 24 comprises a flexible diaphragm 25, mounted between the central housing part 7 and the end cover 9, and a rigid portion 26 connected to the diaphragm 25, and which carries the master cylinder piston 10, the valve means 22 and a valve actuating means 27. The servo is vacuum-operated, with the valve means 22 operative to control communication of the boost chamber 23, which is defined between the movable wall 24 and the end cover 9, with a vacuum source (not shown) through a vacuum chamber 28 on the opposing side of the movable wall 24, or with atmosphere through a connection 29 in the end cover 9.

The cable 3 enters the housing 6 through an aperture 30 in the part 7. It is connected to a member 31 which is part of the actuating means 27 and which is movable in a recess 32 in the rigid wall portion 26. A caged spring 33 acts between the member 31 and the wall portion 26. The member 31 is pivotally connected at 34 to the ends 35 of a forked lever 36. An intermediate portion 37 of the lever 36 fulcrums on a part 38 of the wall portion 26, and the single end 39 of the lever 36 acts on the valve means 22 through a spring 40.

The valve means 22 has a valve member 41 carried from the wall portion 26 by a resilient rubber mount 42. The valve member 41 cooperates with first and second seats 43, 44 to form inlet and exhaust valves respectively. The first seat 43 is formed on the wall portion 26, while the second seat 44 is carried from the portion 26 by a rolling diaphragm 45. The lever 36 acts on the second seat 44.

In the inoperative position shown the inlet valve is closed and the exhaust valve is open, so that the boost chamber 23 is connected to the vacuum source (apertures 46, 47 are formed in the portion 26 to provide the connection). The movable wall 24 is therefore in its retracted position, as is the master cylinder piston 10, while the clutch release bearing 5 is loaded in the actuating direction by the pressure in the hydraulic system.

When a load is applied to the clutch pedal a tension force builds up in the cable 3. This force acts on the member 31, and on the movable wall 24 through the spring 33, which is relatively strong, so that the movable wall 24 starts to move away from its retracted position. The tension force continues to increase, and at a given point overcomes the force in the spring 33, thus moving member 31 relative to the movable wall. Movement of member 31 pivots the lever 36 about point 38, which applies a reduced force to the valve seat 44, through the spring 40. Initial movement of the valve seat 44 brings it into contact with the valve member 41 to close the exhaust valve. Further movement causes the valve member 41 to move away from the fixed seat 43 to open the inlet valve. This pressurises the boost chamber 23 to operate the movable wall 24, which in turn operates the master cylinder 1 to disengage the clutch. Pressure from the boost chamber 23 also acts on the valve seat 44, tending to move it (and the valve member 41) back again to balance the inlet valve. The pressure acting on the seat 44 also provides a reaction at the lever 36.

When the input load is removed, the spring 33 returns the member 31 towards its original position, thus reducing the load applied to the valve by the lever 36. This allows the inlet valve to close fully, and the exhaust valve to open to reduce the pressure in the boost chamber 23 so that the movable wall 24 and the master cylinder return to their retracted positions under the influence of the clutch return spring (not shown). As the boost pressure decreases, the pressure acting on the valve seat 44 decreases. Thus, the reaction force applied to the lever 36 reduces, and the valve seat 44 tends to move towards the valve member 41 to balance the exhaust valve, as the parts return to their retracted positions.

The advantages of the sealing and pressurisation of the master cylinder reservoir 16 have been pointed

7

out above. The arrangement has the further advantage of providing a sealed, maintenance-free unit. The embodiment shown also provides a compact way of combining a vacuum servo with an hydraulic master cylinder in a single unit. The operation of the servo is particularly efficient, as the valve means is arranged to exhibit negative feedback (provided by the movement of the valve seat 44 to counter the effect on the valve of a change in input load) which stabilises operation of the servo. Further, the combined unit requires only two simple connections to the clutch actuation system.

In a modification (not shown) the slave cylinder may also be located in the housing with the master cylinder and servo, and the whole unit located in the vehicle transmission bell-housing, so that it does not require extra space in the vehicle.

8

CLAIMS

1. A vehicle clutch actuating system including an hydraulic system having a master cylinder (1) which provides an output force to actuate the clutch in response to an input force applied from a pedal-operated input member, characterised in that the hydraulic system has a reservoir (16) of hydraulic fluid for the master cylinder (1), the reservoir (16) being sealed and the hydraulic system pressurised to a low level.

2. A vehicle clutch actuating system as claimed in claim 1, in which the reservoir (16) is pressurised to pressurise the hydraulic system.

3. A vehicle clutch actuating system as claimed in claim 1 or claim 2, in which the reservoir (16) is sealed, at least partly, by a flexible membrane (20).

4. A vehicle clutch actuating system as claimed in claim 3, in which the reservoir (16) is pressurised by means of pressurised gas acting on the flexible membrane (20).

5. A vehicle clutch actuating system as claimed in any preceding claim, in which the reservoir (16) is located in a housing (6) for the master cylinder (1).

6. A vehicle clutch actuating system as claimed in claim 4 and claim 5, in which a gas reservoir (21) is also located in the housing (6), with the reservoirs (16, 21) separated and sealed by the flexible membrane (20).

7. A vehicle clutch actuating system as claimed in any preceding claim, and incorporating a clutch servo (2) by means of which the input force is applied to the master cylinder (1), the master cylinder (1) and the servo (2) being located in a single housing (6).

8. A vehicle clutch actuating system as claimed in claim 7, and incorporating a slave cylinder (4) operated by the master cylinder (1), in which the slave cylinder (4) is remote from the housing (6).

9. A vehicle clutch actuating system as claimed in claim 7, and incorporating a slave cylinder (4) operated by the master cylinder (1), in which the slave cylinder (4) is also located in the housing (6), which comprises a vehicle transmission bell-housing.

10. A vehicle clutch actuating system as claimed in any of claims 7 to 9, in which the servo (2) comprises a vacuum-operated servo actuated by a cable (3) by which the input force is applied from the pedal-operated input member.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 142 290 (LUCAS INDUSTRIES) * Whole document * | 1,2,5, 8 | F 16 D 25/12 F 15 B 7/08 |
| Y | | 3,4,6, 7,10 | |
| Y | GB-A- 599 948 (BENDIX AVIATION) * Whole document * | 3,4,6 | |
| A | | 1,2,5, 8 | |
| Y | US-A-2 977 935 (RANDOL) * Whole document * | 7 | **TECHNICAL FIELDS SEARCHED (Int Cl 4)** |
| A | | 8 | F 16 D 25/00 F 15 B B 60 T B 60 K |
| Y | GB-A-1 550 613 (AUTOMOTIVE PRODUCTS) * Whole document * | 10 | |
| A | | 7 | |
| A | US-A-2 520 731 (MacDUFF) | | |

The present search report has been drawn up for all claims

| Place of search | Date of completion of the search | Examiner |
|---|---|---|
| THE HAGUE | 15-07-1986 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82